## Europäisches Patentamt

## European Patent Office

## Office européen des brevets

(19)

(11) Veröffentlichungsnummer : **0 137 256 B2**

(12) **NEUE EUROPÄISCHE PATENTSCHRIFT**

(45) Veröffentlichungstag der neuen Patentschrift :
04.11.92 Patentblatt 92/45

(51) Int. Cl.$^5$ : **C09D 175/00**

(21) Anmeldenummer : **84110027.4**

(22) Anmeldetag : **23.08.84**

(54) **Überzugsmasse, Verfahren zur Herstellung von Überzügen und beschichtetes Substrat.**

Die Akte enthält technische Angaben, die nach dem Eingang der Anmeldung eingereicht wurden und die nicht in dieserPatentschrift enthalten sind.

(30) Priorität : **14.09.83 DE 3333072**

(43) Veröffentlichungstag der Anmeldung :
**17.04.85 Patentblatt 85/16**

(45) Bekanntmachung des Hinweises auf die Patenterteilung :
**21.01.87 Patentblatt 87/04**

(45) Bekanntmachung des Hinweises auf die Entscheidung über den Einspruch :
**04.11.92 Patentblatt 92/45**

(84) Benannte Vertragsstaaten :
**AT BE CH DE FR GB IT LI NL SE**

(56) Entgegenhaltungen :
**AU-A-82 916 85
DE-A- 2 359 923
DE-A- 2 751 761
DE-A- 3 108 861
FR-A- 2 083 108
US-A- 3 962 369**

(73) Patentinhaber : **BASF Lacke + Farben AG
Glasuritstrasse 1
W-4400 Münster (DE)**

(72) Erfinder : **Poth, Ulrich
Albachtener Strasse 97 d
W-4400 Münster (DE)**
Erfinder : **Hille, Hans-Dieter
In der Schlade 24
W-5060 Bergisch-Gladbach 2 (DE)**

(74) Vertreter : **Münch, Volker, Dr. et al
c/o BASF Lacke + Farben AG Patentabteilung
Glasuritstrasse 1 Postfach 61 23
W-4400 Münster (DE)**

EP 0 137 256 B2

Jouve, 18, rue Saint-Denis, 75001 PARIS

**Beschreibung**

Die Erfindung betrifft eine Überzugsmasse zur Herstellung der Basisschicht einer aus mindestens einer Basisschicht und mindestens einer transparenten Deckschicht bestehenden Mehrschichtlackierung, enthaltend Bindemittel auf Basis organischer Harze, Metall-Pigmente, organische Lösungsmittel und gegebenenfalls weitere Pigmente sowie übliche Additive und Hilfsstoffe.

In der US-PS 3 639 147 ist eine sogenannte Zweischicht-Metallic-Lackierung der o. g. Art beschrieben. Bei dieser und anderen bekannten Metallic-Lackierungen enthält die zur Herstellung der Basisschicht verwendete Überzugsmasse zur Verbesserung des metallischen Effekts der resultierenden Lackierung Celluloseester, insbesondere Celluloseacetobutyrat.

Der Zusatz von Celluloseacetobutyrat bringt einige Nachteile mit sich, so ergeben sich häufig Unverträglichkeiten mit anderen Lackbestandteilen, die resultierenden Überzüge zeigen eine begrenzte Elastizität und eine schlechte Zwischenschichthaftung und die noch nicht eingebrannten Überzüge werden beim sogenannten Naß-in-Naß-Verfahren durch die zur Herstellung der transparenten Deckschicht aufgebrachte Überzugsmasse angelöst.

Es ist Aufgabe der vorliegenden Erfindung, diese Nachteile des Standes der Technik zu vermeiden und eine Überzugsmasse zur Herstellung der Basisschicht von mehrschichtigen Metallic-Lackierungen zu schaffen, bei deren Verwendung eine gute Verträglichkeit, eine gute Haftung und ein geringeres Wiederanlösen auftreten und die ohne den Einsatz von Celluloseacetobutyrat zu Überzügen mit gutem Metallic-Effekt führt.

Diese Aufgabe wird erfindungsgemäß gelöst durch eine Überzugsmasse der eingangs genannten Art, die dadurch gekennzeichnet ist, daß das Bindemittel aus den folgenden Komponenten besteht:

A) 20 bis 60 Gew.-% eines oder mehrerer Elastomerer, die Urethan- und Harnstoffgruppierungen in einem Molekül enthalten und herstellbar sind durch Umsetzung von

a1) linearen Polyether- oder Polyesterglykolen mit endständigen Hydroxylgruppen und linearen Diaminen mit primären und/oder sekundären Aminogruppen, gegebenenfalls zusammen mit niedermolekularen Diolen mit Molekulargewichten von ca. 62 bis 400 mit

a2) aliphatischen und/oder cycloaliphatischen Diisocyanaten, wobei die Komponenten a1) und a2) in einem Molverhältnis von 0,8:1 bis 1,5:1 eingesetzt werden,

B) 10 bis 50 Gew.% eines oder mehrerer Polyester, herstellbar durch Umsetzung von

b1) aromatischen und aliphatischen und/oder cycloaliphatischen Polycarbonsäuren, wobei 40 bis 70 Mol-% der Polycarbonsäuren aromatische und 60 bis 30 Mol-% aliphatische und/oder cycloaliphatische Polycarbonsäuren sind und 0 bis 50 Mol-% der gesamten Polycarbonsäuren Tricarbonsäuren sind, mit b2) Polyolen, wobei 20 bis 60 Mol-% der Polyole 2 oder 3 Kohlenstoffatome aufweisen und 40 bis 80 Mol-% 4 oder mehr Kohlenstoffatome aufweisen, mindestens 40 Mol-% der eingesetzten Diole aliphatische Seitenketten aufweisen, 0 bis 50 Mol-% der Polyole Triole sind und das Verhältnis der Komponenten b1) und b2) der folgenden Formel entspricht:

$$K = \frac{n_1 - n_2 (F - 2)}{n_2}$$

in der $n_1$ die Molzahl der Polyole, $n_2$ die Molzahl der Polycarbonsäuren und F den molaren Mittelwert der Funktionalität der Polycarbonsäuren bedeuten und K einen Wert von 1,05 bis 1,5 aufweist, und

C) 5 bis 25 Gew.% eines oder mehrerer partiell mit Monoalkoholen veretherter Polykondensate aus Melamin, Benzoguanamin und/oder Harnstoff mit Formaldehyd, wobei im Falle von Melamin-Formaldehydharzen das Molverhältnis Melamin zu Formaldehyd 1:4,5 bis 1:6 beträgt und im Falle von Benzoguanamin- oder Harnstoff-Formaldehydharzen das Molverhältnis Benzoguanamin bzw. Harnstoff zu Formaldehyd 1:2,5 bis 1:4 beträgt

und wobei die Summe der Komponenten A), B) und C) 100 % beträgt.

Für die Herstellung der Komponente A) werden als Ausgangsverbindungen a1) lineare Polyether- oder Polyesterglykole mit endständigen Hydroxylgruppen und lineare Diamine mit primären und/oder sekundären Aminogruppen, gegebenenfalls zusammen mit niedermolekularen Diolen mit Molekulargewichten von ca. 62 bis 400 eingesetzt.

Die höhermolekularen Polyhydroxylverbindungen sollen frei von aromatischen Urethangruppen sein (z.B. sollen keine Prepolymeren aus Dihydroxyverbindungen und unterschüssigen Mengen von aromatischen Diisocyanaten verwendet werden), damit die Lichtechtheit der Verfahrensprodukte gewährleistet bleibt. Polyacetale und Polyether können prinzipiell zwar eingesetzt werden, sind wegen ihrer Anfälligkeit gegen oxydativen Abbau aber weniger geeignet. Bevorzugt werden Polyester verwendet, vor allem solche aus Adipinsäure und Diolen oder Mischungen aus Diolen, z.B. Äthylen- und Propylenglykol, Butandiol-1,4, 2,2-Dimethylpropandiol-1,3, Hexandiol-1,3, Hexandiol-1,6 oder Bishydroxymethylcyclohexan. Bevorzugt sind Diole mit mehr als vier C-Atomen. Sehr gut geeignet sind auch Polyester mit enger Molekulargewichtsverteilung, die durch Kondensation von Caprolacton und Diolen erhalten werden können. Ganz hervorragende Hydrolysenbeständigkeiten, welche die üblichen Polyestereigenschaften weit übertreffen, lassen sich mit Hexandiol-Polycarbonaten oder Hexandiol-Adipinsäure-Mischpolycarbonaten erzielen.

Neben den genannten höhermolekularen Dihydroxyverbindungen können bei der Prepolymerbildung gegebenenfalls geringe Mengen (etwa 0,05 bis 2 Mol/kg Elastomer) an niedermolekularen Diolen mit Molekulargewichten von ca. 62 bis 400 mitverwendet werden, zum Beispiel Äthylenglykol, Butandiol-1,4, Butandiol-2,3, 2,2-Dimethylpropandiol-1,3 oder N-stearyl-N'N'-bis-oxäthylharnstoff. Besonders bevorzugt sind Diole, welche tertiäre Aminogruppen aufweisen, zum Beispiel N,N-Bis-($\beta$-hydroxyäthyl)-methylamin, N,N-Bis-($\beta$-hydroxyäthyl)-isopropylamin, N,N-Bis-($\beta$-hydroxypropyl)-tert.-amylamin oder Bis-(3-aminopropyl)-piperazin, da durch sie die Stabilität der Polyurethane gegen Festigkeitsabbau bei Belichtung weiter verbessert wird.

Beispiele für lineare Diamine mit primären und/oder sekundären Aminogruppen sind Ethylendiamin, 1,2- oder 1,3-Propylendiamin, 1,6-hexandiamin, 2-Methyl-1,6-hexandiamin, 1-Methyl-2,4-diamino-cyclohexan, 1-Amino-3-amino-methyl-3,5,5-trimethylcyclohexan, 1,3-oder 1,4-Bis-aminomethylcyclohexan, 4,4'-Diaminodicyclohexylmethan oder ähnliche, an sich bekannte Diamine. Weitere geeignete Kettenverlängerungsmittel sind Hydrazin, Methylhydrazin bzw. Adipinsäuredihydrazid, Semicarbazidopropionsäurehydrazid u.ä.

Die Komponente $a_1$ wird mit aliphatischen und/oder cycloaliphatischen Diisocyanaten zu Elastomeren, die Urethan- und Harnstoffgruppierungen in einem Molekül enthalten, umgesetzt. Geeignete Diisocyanate sind z. B. Hexamethylen-1,6-diisocyanat, 2,2,4-Trimethylhexandiisocyanat, 4,8-Di-oxa-6,6-dimethyl-undecan-1,11-diisocyanat, Lysin-$C_1$-$C_6$-ester-diisocyanate, 4,4'-Dicyclohexylmethan-diisocyanat, 3,3'-Dimethyl-4,4'-dicyclohexylmethan-diisocyanat, vorzugsweise in Form der cis/cis bzw. cis/trans angereicherten Stereoisomeren-Gemische), 1,4-Cyclohexandiisocyanat und ganz besonders das 1-Isocyanato-3- isocyanatomethyl - 3,5,5-trimethylcyclohexan, da letzteres Polyurethane ergibt, welche in Lösung am wenigsten zum Gelieren neigen und die beste Löslichkeit In soft-solvents-Mischungen besitzen. Die Reaktion kann in Schmelze und/oder in inerten Lösungsmitteln, z.B. Toluol oder Xylol, erfolgen. Sie wird üblicherweise bei Temperaturen zwischen 60° und 150°C, vorzugsweise 80° bis 120°C vorgenommen, wobei die Reaktionszeit zwischen etwa 10 Minuten und mehreren Stunden liegen kann.

Die als Komponente B) eingesetzten Polyester werden aus Polycarbonsäuren und Polyolen hergestellt. Geeignete Polycarbonsäuren sind z.B. Phthalsäure, Isophthalsäure, Terephthalsäure, Hexahydrophthalsäure, Adipinsäure, Azelainsäure, Sebazinsäure oder Trimellithsäure. Als Polyole können die bereits als Komponenten $a_1$ genannten Glykole eingesetzt werden. Neben diesen werden als Triole Glycerin, Trimethylolethan, Trimethylolpropan oder ähnliche Verbindungen verwendet.

Als Komponente C) werden Aminoharze eingesetzt, die Polykondensate aus Melamin, Benzoguanamin und/oder Harnstoffmethformaldehyd sind. Diese sind partiell mit Monoalkoholen verethert. Als Monoalkohole kommen hier z.B. in Frage Methanol, Ethanol, Propanol oder Butanol.

Die erfindungsgemäßen Überzugsmassen weisen eine gute Verträglichkeit aller Bestandteile, gute Elastizität und gute Haftung der resultierenden Überzüge sowie geringes Wiederanlösen beim Naß-in-naß-Verfahren auf. Insbesondere auch beim Einsatz von festkörperreichen Einkomponenten- und Zweikomponenten-Klarlacken für die transparente Deckschicht zeigen sie eine gute Überlackierbarkeit. Ferner weisen die resultierenden Mehrschichtlackierungen einen guten Metallic-Effekt auf, auch wenn die erfindungsgemäßen Überzugsmassen mit erhöhtem Festkörpergehalt appliziert werden. Weiterhin wurde gefunden, daß die Überzugsmassen zu einem verbesserten Steinschlagschutz führen.

Als weitere Komponente D) enthält die Überzugsmasse zur Verbesserung des Metallic-Effektes vorteilhaft ein Copolymerisat, das aus 85 bis 95 Gew.-% Ethylen und 15 bis 5 Gew.-% Vinylacetat hergestellt worden ist, in einem Anteil von 5 bis 15 Gew.-%, bezogen auf die Summe der Komponenten A) bis D).

Vorteilhaft basiert das Harz A) auf Polyesterdiolen und Diaminen im Molverhältnis 0,8 : 1,2 bis 1,2 : 0,8 als Komponente $a_1$.

Der Metallic-Effekt kann vorteilhaft weiterhin dadurch verbessert werden, daß die Überzugsmasse zusätzlich zu den Komponenten A), B), C) und gegebenenfalls D) als Komponente E) polymere Mikroteilchen mit einer Größe oder einer Größenverteilung im Bereich von 0,01 bis 2 $\mu$m in einem Anteil von 5 bis 15 Gew.-%, bezogen auf die Summe der Komponenten A) bis E) enthält, die hergestellt worden sind durch Emulsionspolymerisation einer Mischung von ungesättigten Monomeren, von denen vorzugsweise ein Teil Carboxyl- oder Hydroxylgruppen enthält und ein Teil frei von Carboxyl- und Hydroxylgruppen ist und eines polyfunktionellen Vernetzers, wobei die Emulsionspolymerisation in wässriger Phase durchgeführt worden ist und während oder nach der Polymerisation das Wasser entfernt worden ist.

Derartige polymere Mikroteilchen sowie die Herstellung sogenannter Mikrogele sind beispielsweise in der EP 0 029 637 A2 beschrieben.

Die Mikroteilchen werden bevorzugt anstelle des Copolimerisats aus Ethylen und Vinylacetat eingesetzt.

Es ist aber auch möglich, das Copolymerisat und die Mikroteilchen nebeneinander zur Verbesserung des Metallic-Effekts einzusetzen.

Als ungesättigte Monomere zur Herstellung der Mikroteilchen kommen beispielsweise einerseits Acrylsäure, Methacrylsäure, Hydroxyethylacrylat, Hydroxypropylacrylat, Hydroxyethylmethacrylat oder Hydroxypropylmethacrylat und andererseits Alkylester der Acrylsäure und Methacrylsäure mit vorzugsweise 1 bis 4 Kohlenstoffatomen im Alkylrest sowie Styrol und $\alpha$-Methylstyrol in Betracht.

Als polyfunktionelle Vernetzer sind Verbindungen mit zwei ethylenisch ungesättigten Doppelbindungen geeignet, die zu vernetzten, in der Überzugsmasse unlöslichen Mikroteilchen führen. Beispiele hierfür sind: Ethlylenglykoldimethacrylat, Tetraethylenglykoldimethacrylat, Methylenbisacrylamid, Methylenbismethacrylamid, Divinylbenzol, Vinylmethacrylat, Vinylcrotonat, Vinylacrylat, Divinylacetylen, Trivinylbenzol, Glycerintrimethacrylat, Pentaerytritholtetramethacrylat, Triallylcyanorat, Divinylethan, und ähnliche Verbindungen, wie sie in der EP 0 029 637 A2 beschrieben sind.

Die Erfindung betrifft auch ein Verfahren zur Herstellung von Überzügen, bei dem eine Metallpigmente enthaltende Überzugsmasse zur Ausbildung einer Basisschicht und nach einer Ablüftzeit nach dem Naß-in-Naß-Verfahren hierauf eine zweite, eine transparente Deckschicht bildende Überzugsmasse auf ein Substrat aufgebracht werden. Das erfindungsgemäße Verfahren ist dadurch gekennzeichnet, daß das Bindemittel der Überzugsmasse für die Basisschicht aus den folgenden Komponenten besteht:

A) 20 bis 60 Gew.-% eines oder mehrerer Elastomerer, die Urethan- und Harnstoffgruppierungen in einem Molekül enthalten und herstellbar sind durch Umsetzung von

a1) linearen Polyether- oder Polyesterglykolen mit endständigen Hydroxylgruppen und linearen Diaminen mit Primären und/oder sekundären Aminogruppen, gegebenenfalls zusammen mit niedermolekularen Diolen mit Molekulargewichten von ca. 62 bis 400 mit

a2) aliphatischen und/oder cycloaliphatischen Diisocyanaten, wobei die Komponenten a1) und a2) in einem Molverhältnis von 0,8:1 bis 1,5:1 eingesetzt werden,

B) 10 bis 50 Gew.% eines oder mehrerer Polyester, herstellbar durch Umsetzung von

b1) aromatischen und aliphatischen und/oder cycloaliphatischen Polycarbonsäuren, wobei 40 bis 70 Mol-% der Polycarbonsäuren aromatische und 60 bis 30 Mol-% aliphatische und/oder cycloaliphatische Polycarbonsäuren sind und 0 bis 50 Mol-% der gesamten Polycarbonsäuren Tricarbonsäuren sind, mit b2) Polyolen, wobei 20 bis 60 mol-% der Polyole 2 oder 3 Kohlenstoffatome aufweisen und 40 bis 80 Mol-% 4 oder mehr Kohlenstoffatome aufweisen, mindestens 40 Mol-% der eingesetzten Diole aliphatische Seitenketten aufweisen, 0 bis 50 Mol-% der Polyole Triole sind und das Verhältnis der Komponenten b1) und b2) der folgenden Formel entspricht:

$$K = \frac{n_1 - n_2 (F - 2)}{n_2}$$

in der $n_1$ die Molzahl der polyole, $n_2$ die Molzahl der Polycarbonsäuren und F den molaren Mittelwert der Funktionalität der polycarbonsäuren bedeuten und K einen Wert von 1,05 bis 1,5 aufweist, und

C) 5 bis 25 Gew.% eines oder mehrerer partiell mit Monoalkoholen veretherter Polykondensate aus Melamin, Benzoguanamin und/oder Harnstoff mit Formaldehyd, wobei im Falle von Melamin-Formaldehydharzen das Molverhältnis Melamin zu Formaldehyd 1:4,5 bis 1:6 beträgt und im Falle von Benzoguanamin- oder Harnstoff-Formaldehydharzen das Molverhältnis Benzoguanamin bzw. Harnstoff zu Formaldehyd 1:2,5 bis 1:4 beträgt

und wobei die Summe der Komponenten A), B) und C) 100 % beträgt.

Vorteilhafte Ausgestaltungen des erfindungsgemäßen Verfahrens ergeben sich aus den Unteransprüchen.

Weiterhin betrifft die Erfindung ein mit einer aus mindestens einer Metallpigmente enthaltenden Basisschicht und mindestens einer transparenten Deckschicht bestehenden Mehrschichtlackierung beschichtetes Substrat. Zur Herstellung der Basisschicht ist die erfindungsgemäße Überzugsmasse verwendet worden.

Im folgenden wird die Erfindung anhand von Ausführungsbeispielen näher erläutert.

In einem Vierhalskolben mit Rührer, Thermometer und Rückflußkühler werden 741 g eines Polyesters aus Adipinsäure und Neopentylglykol mit einer OH-Zahl von 113 und 26,5 g Diethylenglykol eingewogen und auf 100 °C erhitzt. Nun wird eine halbe Stunde Vakuum angelegt, um alle vorhandene Feuchtigkeit zu entfernen. Danach werden im Abstand von 5 Minuten 1 850 g Butylacetat, 393 g 4,4'-Dicyclohexylmethandiisocyanat und 0,3 g Dibutylzinndilaurat zugegeben und die Temperatur wird 1,5 h auf 100 °C gehalten. Jetzt wird der NCO-Gehalt bestimmt. Er beträgt 1,36 %.

In einem Verdünnungsgefäß werden eine Mischung aus 1 840 g Butylacetat, 1 230 g n-Butanol und 70 g Hexamethylendiamin vorgelegt. Das NCO-Gruppen enthaltende Vorprodukt wird unter Rühren innerhalb 15-20 Minuten zugegeben. Man erhält eine nahezu farblose viskose Lösung mit einem Feststoffgehalt von 20 %.

Beispiel A2

Wie in Beispiel A1 werden 1 300 g eines Caprolactonpolyesters mit der OHZ-Zahl von 112 zusammen mit 73 g Neopentylglykol im Vakuum entwässert. Nach Zugabe von 1 850 g Butylacetat werden zunächst 688 g 3-Isocyanatomethyl-3.5.5-trimethylcyclohexylisocyanat zugegeben. Nach ca. 5 Minuten erfolgt die Zugabe von 0,3 g Dibutylzinndilaurat. Nach einer Reaktionszeit von 2 h bei 100 °C beträgt der NCO-Gehalt der Lösung 2,27 %.

In einem Verdünnungsgefäß wird eine Mischung aus 1 490 g Butylacetat, 1 671 g n-Butanol und 88 g 1,3-Di-aminopropan vorgelegt. Das NCO-Gruppen enthaltende Vorprodukt wird unter Rühren innerhalb 15-20 Minuten zugegeben. Man erhält eine fast farblose viskose Lösung mit einem Festkörper von 30 %.

Beispiel A3

Wie in Beispiel A1 werden 1 500 g eines Polyesters aus Hetandiol-1.6, Neopentylglykol und Adipinsäure mit einer OHZ-Zahl von 75 im Vakuum entwässert. Nach Zugabe von 2 200 g Butylacetat werden zunächst 393 g 4.4′-Dicyclohexylmethandiisocyanat zugegeben, nach ca. 5 Minuten erfolgt die Zugabe von 0,3 g Dibutylzinndilaurat. Nach einer Reaktionszeit von 2 h bei 100 °C beträgt der NCO-Gehalt der Lösung 0,98 %.

In einem Verdünnungsgefäß wird eine Mischung aus 2 280 g Butylacetat, 1 490 g Butanol und 98 g 1-Amino-3-aminomethyl-cyclohexan vorgelegt. Das NCO-Gruppen enthaltende Vorprodukt wird unter Rühren innerhalb von 15-20 Minuten zugegeben. Man erhält eine schwach gelbliche viskose Lösung mit einem Feststoffgehalt von 25 %.

Beispiel B1

In einem 2 l-Vierhalskolben mit Rührer, elektrischer Widerstandsheizung, Thermometer, Füllkörperkolonne gefüllt mit Pall-Ringen, ausgestattet mit Kopfthermometer, Destillationsbrücke, Kondensatkühler und Vorlage werden eingewogen 111,3 Propandiol-1,3; 329,9 g 2,2-Dimethylpropandiol-1,3, 163,5 g 1,1,1-Trimethylolpropan, 216,7 g Phthalsäureanhydrid, 243,0 g Isophthalsäure, 245,0 g Adipinsäure, 30,0 g Xylol und 2 g Dibutylzinnoxid. Das Reaktionsgemisch wird unter Rühren schnell auf 160 °C erhitzt. Von 160 °C wird die Temperatur innerhalb 5 Stunden auf 220 °C so gesteigert, daß die Kolonnen-Kopftemperatur 103°C nicht übersteigt. Es wird bei 220°C gehalten und weiterverestert, bis eine Säurezahl (nach DIN) von 15 erreicht ist. Dann wird auf 140 °C abgekühlt und der Polyester in 800 g einer Mischung aus Xylol und Ethylglykolacetat im Verhältnis 1 : 1 angelöst unter weiterem Kühlen. Es resultiert eine 60 %ige Lösung eines Polyesters mit einem Molekulargewicht von 930 und einer OH-Zahl (DIN) von 160, bezogen auf den festen Polyester.

Beispiel B2

Unter Verwendung der im Beispiel B1 beschriebenen Apparatur, werden eingewogen 60,4 g Ethandiol-1,2, 74,0 g Propandiol-1,2, 227,9 g 2,2-Dimethylpropandiol-1,3, 229,9 g Hexandiol-1,6, 485,1 g Isophthalsäure, 40,0 g eines Aromatengemisches mit dem Siedebereich 180 bis 205°C und 3,0 g Dibutylzinnoxid. Es wird wie im Beispiel 1 aufgeheizt und verestert bis zu einer Säurezahl von 20. Dann wird auf 160 °C abgekühlt und 213,3 g Adipinsäure und 93,5 g Trimellithsäureanhydrid zugegeben und erneut auf 200 °C aufgeheizt. Es wird bei 200 °C gehalten und verestert bis zu einer Säurezahl von 25. Es wird wie im Beispiel 1 abgekühlt und gelöst. Es resultiert eine 60 %ige Lösung eines Polyesters mit einem Molekulargewicht von 960 und einer OH-Zahl von 115, bezogen auf den festen Polyester.

Beispiel B3

Unter Verwendung der im Beispiel B1 beschriebenen Apparatur und Verfahrensweise werden eingewogen und bei max. 220 °C verestert : 113,4 g Ethandiol-1,2, 142,6 g 2,2-Dimethylpropandiol-1,3, 279,8 g Hydroxipivalinsäureneopentylglykolester, 91,9 g 1,1,1-Trimethylolpropan, 303,5 g Isophthalsäure, 208,5 g Hexahydrophthalsäureanhydrid, 200,2 g Adipinsäure, 30 g Xylol, 2 g Dibutylzinnoxid.

Es wird bei 220 °C verestert bis zu einer Säurezahl von 5. Es resultiert eine 60 %ige Lösung eines Polyesters mit einem Molekulargewicht von 1 520 und einer OH-Zahl von 100, bezogen auf den festen Polyester.

Beispiel B4

Unter Verwendung der im Beispiel B1 beschriebenen Apparatur und Verfahrensweise werden eingewogen und bei max. 220 °C verestert: 102,2 g Propandiol-1,2, 102,2 g Propandiol-1,3, 372,8 g 2,2-Dimethylpropandiol-1,3, 60,0 g 1,1,1-Trimethylolpropan, 331,6 g Phthalsäureanhydrid, 172,0 g Trimellithsäureanhydrid, 196,3 g Adipinsäure, 40 g eines Aromatengemisches mit einem Siedebereich 180-205 °C.

Es wird wie im Beispiel 1, unter besonderer Beachtung der Kopftemperatur, aufgeheizt und verestert bei 200 °C bis zu einer Säurezahl von 10. Es wird wie im Beispiel 1 abgekühlt und angelöst. Es resultiert eine 60 %ige Lösung eines Polyesters mit einem Molekulargewicht von 780 und einer OH-Zahl von 198, bezogen auf den festen Polyester.

Beispiel C Melaminharz

In einen 2 I-Vierhalskolben mit elektrischer Widerstandsheizung, Rührer, Thermometer und Destillationsapparatur für die Kreisfahrweise mit Wasserabscheider werden eingewogen : 560 g Isobutanol, 250 g 37 %-ige wässrige Formaldehydlösung, 30 g Toluol und 0,05 g 85 %ige Phosphorsäure. Das Reaktionsgemisch wird bis 40 °C aufgeheizt und es werden 95,3 g Melamin zugegeben. Es wird auf 85 °C aufgeheizt und die Temperatur langsam auf 100 °C gesteigert, so daß das Reaktionsgemisch dabei zügig destilliert, es wird dabei Wasser ausgekreist. Es wird bei 100 °C gehalten, bis eine Benzinverträglichkeit von 1/5 mit einem Benzin des Siedebereichs von 135-180°C erreicht wird. Dann wird der Rücklauf der Destillationsanlage geschlossen und 300 g Lösungsmittel abdestilliert; dabei steigt die Temperatur auf 115 °C an. Dann wird auf 80 °C abgekühlt und das Reaktionsgemisch mit 65 g Isobutanol verdünnt. Es resultiert die Lösung eines Melaminharzes mit einem Festkörper (60 Min. 100 °C) von 55 % und einer Viskosität von 250 sec (DIN 53 211).

Beispiel D Copolymerdispersion

In einem beheizbaren Mischer mit Schnellrührer werden eingewogen: 200 g Xylol und 100 g eines Ethylenvinylacetat-Copolymer mit einem Vinylacetatgehalt von 12 % und auf 100 °C aufgeheizt und bis zur homogenen Lösung gerührt. Dann wird auf 80 °C abgekühlt und die Lösung mit 700 g eines Gemisches aus Xylol und Butylacetat ausgefällt, die Temperatur sinkt dabei auf 50 °C. Es resultiert eine 10 %ige Dispersion des Copolymers.

Beispiel E1 Herstellung eines Microgelkonzentrates

In einem Polymerisationsgefäß mit Rührer, Rückflußkühler und zwei Zulaufgefäßen werden 2 510 g vollentsalztes Wasser zusammen mit 34 g Natriumlaurylsulfatlösung (35 %ig) auf 80 °C erhitzt.

In einem getrennten Rührgefäß wird unter Rühren eine Präemulsion hergestellt, bestehend aus : 1 267 g vollentsalztem Wasser, 65 g Natriumlaurylsulfatlösung (35 %ig), 490 g Butandioldiacrylat, 478 g Methylmethacrylat und 140 g Hydroxipropylmethacrylat.

In einem Zulaufgefäß wird die Initiatorlösung vorgelegt, bestehend aus 14 g Ammoniumpersulfat und 660 g vollentsalztem Wasser. Die Präemulsion und die Initiatorlösung werden nun simultan zudosiert, so daß der Zulauf der Präemulsion 2 h, der Zulauf der Initiatorlösung 3 h dauert. Die Temperatur wird durch Kühlen auf 80 °C gehalten. Nach Ende des Zulaufs wird die Temperatur noch 1 h bei 80 °C gehalten.

Man erhält eine 20 %ige Dispersion von vernetzten Teilchen, die in keinem organischen Lösungsmittel löslich sind.

2 000 g dieser wäßrigen Dispersion werden in einem Scheidetrichter, zusammen mit 620 g n-Butanol. 10 Minuten lang intensiv geschüttelt. Nach 30 minütiger Wartezeit erhält man 2 Phasen. Die untere wäßrige Phase wird verworfen.

Die microgelhaltige Butanolphase wird in einem mit einem Wasserabscheider und einem Rührer ausgerüsteten Destillierkolben überführt. Hierzu werden 333 g des in Beispiel B2 beschriebenen Polyesters und 500 g Ethylglykolacetat gegeben. Es wird nun im Vakuum bei max. 60 °C das restliche Wasser azeotrop abdestilliert. Man erhält ein Microgelkonzentrat mit einem Festkörpergehalt von 32 %.

Beispiel E2

2 000 g der im Beispiel E1 beschriebenen wäßrigen Dispersion werden in einem Scheidetrichter zusammen mit 800 g Butylacetat 15 Minuten lang intensiv geschüttelt. Nach 1,5-stündiger Wartezeit erhält man 2 Phasen. Die wäßrige Phase wird verworfen. Die organische Phase wird in einem Wasserabscheider und einem Rührer ausgerüsteten Destillierkolben überführt. Hierzu werden 400 g eines Polyesters aus Adipinsäure und Neopentylglykol mit einer OH-Zahl von 123 gegeben. Es wird nun im Vakuum bei max. 60 °C alles noch vorhandene Wasser restlos azeotrop abdestilliert. Man erhält ein Microgelkonzentrat mit einem Feststoffgehalt von 60 %. 1500 g dieses Konzentrates werden wie im Beispiel A1 mit 280 g 4,4'-Dicyclohexylmethandiisocyanat und 0,3 g Dibutylzinndilaurat versetzt. Nach 2 stündiger Reaktionszeit beträgt der NCO-Gehalt 2,66 %.

In einem Verdünnungsgefäß wird eine Mischung aus 1 090 g Butylacetat, 218 g n-Butanol und 95 g 1-Amino-3-aminomethylcyclohexan vorgelegt. Das NCO-Gruppen enthaltende microgelhaltige Vorprodukt wird unter Rühren innerhalb 15-20 Minuten zugegeben. Man erhält eine trübe bläulich schimmernde pastöse Masse mit einem Feststoffgehalt von 40 %.

Beispiele Basislacke 1 bis 9

Die in den Beispielen A1 bis A3 beschriebenen Polyurethan/Polyharnstoff-Elastomerlösungen werden mit den in den Beispielen B1 bis B4 beschriebenen Polyesterlösungen, dem im Beispiel C beschriebenen Melamin-Formaldehydharz und gegebenenfalls mit der im Beispiel D beschriebenen Copolymerdispersion und/oder den in den Beispielen E1 und E2 beschriebenen Microgeldispersion so in einem Rührgefäß unter Rühren gemischt, daß eine homogene Mischung entsteht, deren Zusammensetzung, bezogen auf 100 Gew.-Teile der Festsubstanz, den Angaben in der Tabelle 1 entspricht. Dann wird die in dieser Tabelle angegebene Menge einer « non-Leafing »-Aluminiumbronze angepastet, 65 %ig in aliphatischen Kohlenwasserstoffen mit der 1,5-fachen Menge, bezogen auf die feste Aluminiumbronze an Butylacetat, sorgfältig angeteigt und unter Rühren zu den entsprechenden vorher beschriebenen Mischungen aus Polyurethan/Polyharnstoff-Elastomerlösung, Polyester, Melamin-Formaldehydharz-Lösungen und gegebenenfalls Copolymerdispersion bzw. Microgel gegeben und verteilt. Die so entstandenen Mischungen werden mit einem Gemisch aus 50 Gew.-Teilen Butylacetat, 25 Gew.-Teilen Butylglykolacetat und 25 Gew.-Teilen Butanol auf einen Festkörper von 25 Gew.-% eingestellt.

(Siehe Tabelle 1 Seite 8)

Beispiel K1, Klarlack-Acrylat

In ein 3 I-Reaktionsgefäß mit Thermometer, Rührer, elektrischer Widerstandsheizung, Rückflußkühler und Zulaufgefäß werden 941 g eines Aromatengemisches mit einem Siedebereich von 156-170 °C eingewogen und unter Rühren auf 140 °C erhitzt. Es wird ein Gemisch aus 223 g Styrol, 223 g Methylmethacrylat, 208 g Butandiol-1,4-monoacrylat, 30 g Acrylsäure, 803 g n-Butylacrylat und 18 g Di-tert-Butylperoxid innerhalb von 3 Stunden gleichmäßig aus dem Zulaufgefäß in das Reaktionsgefäß dosiert und die Temperatur bei 140 °C gehalten.

Das Reaktionsgemisch wird weitere 30 Minuten bei 140 °C gehalten und dann wird eine Lösung von 4 g Di-tert.-Butylperoxid in 50 g der Aromatenmischung mit dem Siedebereich zwischen 156 und 172 °C zugegeben.

Nach weiteren 2 Stunden bei 140 °C resultiert eine Acrylatharzlösung mit einen Festkörpergehalt von 60 %. Das Acrylatharz hat eine Säurezahl von 14, eine OH-Zahl von 109 und eine Viskosität von 250 mPa·s (gemessen als 50 %ige Lösung in Xylol mit dem ICI-Viskosimeter).

Beispiel K2, Klarlack

Zu 550 g der im Beispiel K1 beschriebenen 60 %igen Acrylatharzlösung werden 300 g der im Beispiel C beschriebenen Lösung des Melamin-Formaldehyd-Harzes, 150 g Xylol und 50 g Butylglykolacetat unter Rühren zugegeben und sorgfältig gemischt. Es resultiert ein Klarlack mit einem Festgehalt von 46,5 %.

Herstellung der Überzüge

Zur Herstellung der Überzüge werden Abschnitte von in der Automobilserien-Lackierung eingesetzten Karosserieblechen, die mit einer Eisenphosphatierung passiviert sind, eine Beschichtung durch eine kathodische Elektrotauchlackierung und einen Einbrennfüller erhalten haben, mit den in den Beispielen 1 bis 10 beschriebenen Basislacken und dem im Beispiel K2 beschriebenen Klarlack beschichtet.

Zu diesem Zweck werden die in den Beispielen 1 bis 10 beschriebenen Basislacke mit einem Lösungsmittelgemisch aux Xylol und Butylacetat (70 : 30) auf eine Viskosität von 16 sec nach DIN 53 211 und der im Beispiel K2 beschriebene Klarlack mit diesem Lösungsmittelgemisch auf eine Viskosität von 28 sec nach DIN 53 211 eingestellt.

Die eingestellten Basislacke werden mit einer Fließbecher-Spritzpistole mit einer Düsenweite von 1,2 mm und einem Spritzluftdruck von 4 bar so auf die beschriebenen, vorbehandelten Karosserieblechabschnitte ge-

7

spritzt, daß eine Trockenfilmdicke der Basislacke von 12 bis 17 μm resultiert. Der aufgespritzte Basislack wird nach 5 Minuten mit dem eingestellten Klarlack, unter Verwendung der genannten Spritzbedingungen, so gespritzt, daß eine Trockenfilmdicke des Klarlacks von 35 bis 40 μm resultiert. Nach einer Ablüftzeit von 15 Minuten bei Raumtemperatur werden die Blechabschnitte in einem Umluftofen 30 Minuten bei 130 °C eingebrannt.

**Tabelle 1 = Basislacke (Gew.-Teile Festkörpergehalt der Lösungen, bezogen auf Gesamt-Festkörpergehalt = 100)**

|  | 1 | 2 | 3 | 4 | 5 | 6 | 7 | 8 | 9 |
|---|---|---|---|---|---|---|---|---|---|
| A 1 | 30 | – | – | – | 21 | – | – | 48 | 25 |
| A 2 | – | 60 | – | – | – | 40 | – | – | – |
| A 3 | 40 | – | 45 | 40 | – | – | 35 | – | – |
| B 1 | – | 10 | – | – | 50 | 21 | – | – | – |
| B 2 | – | – | – | – | – | – | – | – | – |
| B 3 | – | – | 25 | 21 | – | – | – | – | 45 |
| B 4 | – | – | – | – | – | – | – | – | – |
| C | 12 | 12 | 12 | 12 | 17 | 12 | 37 | 38 | – |
| D | 6 | 6 | 6 | – | – | – | 16 | 15 | 18 |
| E 1 | – | – | – | 15 | – | 15 | – | – | – |
| E 2 | – | – | – | – | – | – | – | – | – |
| Aluminium | 12 | 12 | 12 | 12 | 12 | 12 | 12 | 12 | 12 |

Die so hergestellten Überzüge zeigen einem von einem Fachmann beurteilbaren hervorragenden metallischen Effekt und entsprechen den Forderungen der in den technischen Lieferbedingungen der Automobilserienlackierung aufgeführten Prüfungen.

**Patentansprüche**

1. Überzugsmasse zur Herstellung der Basisschicht einer aus mindestens einer Basisschicht und mindestens einer transparenten Deckschicht bestehenden Mehrschichtlackie rung, enthaltend Bindemittel auf Basis organischer Harze, Metall-Pigmente, organische Lösungsmittel und ggf. weitere Pigmente sowie übliche Additive und Hilfs-stoffe, dadurch gekennzeichnet, daß das Bindemittel aus den folgenden Komponenten besteht:

A) 20 bis 60 Gew.% eines oder mehrerer Elastomerer, die Urethan-und Harnstoffgruppierungen in einem Molekül enthalten und herstellbar sind durch Umsetzung von

a1) linearen Polyether- oder Polyesterglykolen mit endständigen Hydroxylgruppen und linearen Diaminen mit primären und/oder sekundären Aminogruppen, gegebenenfalls zusammen mit niedermolekularen Diolen mit Molekulargewichten von ca. 62 bis 400 mit

a2) aliphatischen und/oder cycloaliphatischen Diisocyanaten, wobei die Komponenten a1) und a2) in einem Molverhältnis von 0,8:1 bis 1,5:1 eingesetzt werden,

B) 10 bis 50 Gew.% eines oder mehrerer Polyester, herstellbar durch Umsetzung von

b1) aromatischen und aliphatischen und/oder cycloaliphatischen polycarbonsäuren, wobei 40 bis 70 Mol-% der polycarbonsäuren aromatische und 60 bis 30 Mol-% aliphatische und/oder cycloaliphatische polycarbonsäuren sind und 0 bis 50 Mol-% der gesamten polycarbonsäuren Tricarbonsäuren sind, mit

b2) Polyolen, wobei 20 bis 60 Mol-% der polyole 2 oder 3 Kohlenstoffatome aufweisen und 40 bis 80 Mol-% 4 oder mehr Kohlenstoffatome aufweisen, mindestens 40 Mol-% der eingesetzten Diole aliphatische Seitenketten aufweisen, 0 bis 50 Mol-% der Polyole Triole sind und das Verhältnis der Komponenten b1) und b2) der folgenden Formel entspricht:

$$K = \frac{n_1 - n_2(F - 2)}{n_2}$$

in der $n_1$ die Molzahl der polyole, $n_2$ die Molzahl der Polycarbonsäuren und F den molaren Mittelwert der Funktionalität der polycarbonsäuren bedeuten und K einen Wert von 1,05 bis 1,5 aufweist und

C) 5 bis 25 Gew.% eines oder mehrerer partiell mit Mono- alkoholen veretherter Polykondensate aus Melamin, Benzoguanamin und/oder Harnstoff mit Formaldehyd, wobei im Falle von Melamin-Formaldehydharzen das Molverhältnis Melamin zu Formaldehyd 1:4,5 bis 1:6 beträgt und im Falle von Benzoguanamin- oder Harn-stoff-Formaldehydharzen das Molverhältnis Benzoguanamin bzw. Harnstoff zu Formaldehyd 1:2,5 bis 1:4 beträgt,

und wobei die Summe der Komponenten A), B) und C) 100 % beträgt.

2. Überzugsmasse nach Anspruch 1, dadurch gekennzeichnet, daß sie zusätzlich als Komponente D) ein Copolymerisat, hergestellt aus 85 bis 95 Gew.-% Ethylen und 15 bis 5 Gew.-% Vinylacetat, in einem Anteil von 5 bis 15 Gew.-%, bezogen auf die Summe der Komponenten A) bis D) enthält.

3. Überzugsmasse nach Anspruch 1 oder 2, dadurch gekennzeichnet, daß zur Herstellung des Harzes A) als Komponente $a_1$) Polyesterdiole und Diamine im Molverhältnis 0,8 : 1 bis 1,2 : 1 verwendet worden sind.

4. Überzugsmasse nach einem der Ansprüche 1 bis 3, dadurch gekennzeichnet, daß sie zusätzlich zu den Komponenten A), B) C) und gegebenenfalls D) als Komponente E) polymere Mikroteilchen mit einer Größe oder einer Größenverteilung im Bereich von 0,01 bis 2 μm in einem Anteil von 5 bis 15 Gew-%, bezogen auf die Summe der Komponenten A) bis E) enthält, die hergestellt worden sind durch Emulsionspolymerisation einer Mischung von ungesättigten Monomeren, von denen vorzugsweise ein Teil Carboxyl- oder Hydroxylgruppen enthält und ein Teil frei von Carboxyl- und Hydroxylgruppen ist und eines polyfunktionellen Vernetzers, wobei die Emulsionspolymerisation in wässriger Phase durchgeführt worden ist und während oder nach der Polymerisation das Wasser entfernt worden ist.

5. Verfahren zur Herstellung von Überzügen, bei dem eine Metallpigmente enthaltende Überzugsmasse zur Ausbildung einer Basisschicht und nach einer Ablüftzeit nach dem "Naß-in-Naß"-Verfahren hierauf eine zweite, eine transparente Deckschicht bildende Überzugsmasse auf ein Sub strat aufgebracht werden, dadurch gekennzeichnet, daß das Bindemittel der Überzugsmasse für die Basisschicht aus den folgenden Komponenten besteht:

A) 20 bis 60 Gew.% eines oder mehrerer Elastomerer, die Urethan- und Harnstoffgruppierungen in einem Molekül enthalten und herstellbar sind durch Umsetzung von

a1) linearen Polyether- oder Polyesterglykolen mit endständigen Hydroxylgruppen und linearen Diaminen mit primären und/oder sekundären Aminogruppen, gegebenenfalls zusammen mit niedermolekularen Diolen mit Molekulargewichten von ca. 62 bis 400 mit

a2) aliphatischen und/oder cycloaliphatischen Diisocyanaten, wobei die Komponenten a1) und a2) in einem Molverhältnis von 0,8:1 bis 1,5:1 eingesetzt werden,

B) 10 bis 50 Gew.% eines oder mehrerer polyester, herstellbar durch Umsetzung von

b1) aromatischen und aliphatischen und/oder cycloaliphatischen polycarbonsäuren, wobei 40 bis 70 Mol-% der polycarbonsäuren aromatische und 60 bis 30 Mol-% aliphatische und/oder cycloaliphatische polycarbonsäuren sind und 0 bis 50 Mol-% der gesamten polycarbonsäuren Tricarbonsäuren sind, mit

b2) Polyolen, wobei 20 bis 60 Mol-% der polyole 2 oder 3 Kohlenstoffatome aufweisen und 40 bis 80 Mol-% 4 oder mehr Kohlenstoffatome aufweisen, mindestens 40 Mol-% der eingesetzten Diole aliphatische Seitenketten aufweisen, 0 bis 50 Mol-% der polyole Triole sind und das Verhältnis der Komponenten b1) und b2) der folgenden Formel entspricht:

$$K = \frac{n_1 - n_2\,(F - 2)}{n_2}$$

in der $n_1$ die Molzahl der polyole, $n_2$ die Molzahl der polycarbonsäuren und F den molaren Mittelwert der Funktionalität der polycarbonsäuren bedeuten und K einen Wert von 1,05 bis 1,5 aufweist, und

C) 5 bis 25 Gew.% eines oder mehrerer partiell mit Monoalkoholen veretherter polykondensate aus Melamin, Benzoguanamin und/oder Harnstoff mit Formaldehyd, wobei im Falle von Melamin-Formaldehydharzen das Molverhältnis Melamin zu Formaldehyd 1:4,5 bis 1:6 beträgt und im Falle von Benzoguanamin- oder Harnstoff-Formaldehydharzen das Molverhältnis Benzoguanamin bzw. Harnstoff zu Formaldehyd 1:2,5 bis 1:4 beträgt

und wobei die Summe der Komponenten A), B) und C) 100 % beträgt.

6. Verfahren nach Anspruch 5, dadurch gekennzeichnet, daß die Uberzugsmasse für die Basisschicht als weitere Bindemittelkomponente D) ein Copolymerisat, hergestellt aus 85 bis 95 Gew.-% Ethylen und 15 bis 5 Gew.-% Vinylacetat, in einem Anteil von 5 bis 15 Gew.-%, bezogen auf die Summe der Komponenten A) bis D) enthält.

7. Verfahren nach Anspruch 5 oder 6, dadurch gekennzeichnet, daß zur Herstellung des Harzes A) als Komponente $a_1$) Polyesterdiole und Diamine im Molverhältnis 0,8 : 1 bis 1,2 : 1 verwendet worden sind.

8. Verfahren nach einem der Ansprüche 5 bis 7, dadurch gekennzeichnet, daß die Überzugsmasse zusätzlich zu den Komponenten A), B), C) und gegebenenfalls D) als Komponente E) polymere Mikroteilchen mit einer Größe oder einer Größenverteilung im Bereich von 0,01 bis 2 μm in einem Anteil von 5 bis 15 Gew.-%, bezogen auf die Summe der Komponenten A) bis E) enthält, die hergestellt worden sind durch Emulsionspolymerisation einer Mischung von ungesättigten Monomeren, von denen vorzugsweise ein Teil Carboxyl- oder Hydroxylgruppen enthält und ein Teil frei von Carboxyl- und Hydroxylgruppen ist und eines polyfunktionellen Vernetzers, wobei die Emulsionspolymerisation in wässriger Phase durchgeführt worden ist und während oder nach der Polymerisation das Wasser entfernt worden ist.

9. Mit einer aus mindestens einer Metallpigmente enthaltenden Basisschicht und mindestens einer transparenten Deckschicht bestehenden Mehrschichtlackierung beschichtetes Substrat, dadurch gekennzeichnet, daß zur Herstellung der Basisschicht eine Überzugsmasse nach einem der Ansprüche 1 bis 4 verwendet worden ist.

**Claims**

1. Coating composition for the preparation of the base coat of a multilayer enamel consisting of at least one base coat and at least one transparent protective coat, the said coating composition containing binders based on organic resins, metallic pigments, organic solvents and, if appropriate, other pigments as well as customary additives and auxiliaries, characterised in that the binder consists of the following components:

A) 20 to 60 % by weight of one or more elastomers which contain urethane and urea groups in one molecule and can be prepared by reacting

a1) linear polyether or polyester glycols with terminal hydroxyl groups and linear diamines having primary and/or secondary amino groups, if appropriate together with low-molecular-weight diols having molecular weights of about 62 to 400 with

a2) aliphatic and/or cycloaliphatic diisocyanates, components a1) and a2) being employed in a molar ratio of 0.8 : 1 to 1.5 : 1,

B) 10 to 50 % by weight of one or more polyesters which can be prepared by reacting

b1) aromatic and aliphatic and/or cycloaliphatic polycarboxylic acids, 40 to 70 mol % of the polycarboxylic acids being aromatic and 60 to 30 mol % of the polycarboxylic acids being aliphatic and/or cycloaliphatic, and 0 to 50 mol % of the total polycarboxylic acids being tricarboxylic acids, with

b2) polyols, 20 to 60 mol % of the polyols having 2 or 3 carbon atoms and 40 to 80 mol % having 4 or more carbon atoms, at least 40 mol % of the diols used having aliphatic side-chains, 0 to 50 mol % of the polyols being triols and the ratio of the components b1 and b2 corresponding to the following formula

$$K = \frac{n_1 - n_2\,(F - 2)}{n_2}$$

in which $n_1$ denotes the number of mol of polyols, $n_2$ denotes the number of mol of polycarboxylic acids, F denotes the average molar value of the functionality of the polycarboxylic acids and K has a value of 1.05 to 1. 5, and

C) 5 to 25 % by weight of one or more polycondensates partially etherified with monoalcohols and consisting of melamine, benzoguanamine and/or urea with formaldehyde, the molar ratio of melamine to formaldehyde in the case of melamine/formaldehyde resins being 1 : 4.5 to 1 : 6 and the molar ratio of benzoguanamine or urea to formaldehyde in the case of benzoguanamine/formaldehyde or urea/formaldehyde resins being 1 : 2.5 to 1 : 4, and the sum of the components A), B) and C) being 100 %.

2. Coating composition according to Claim 1, characterised in that it additionally contains, as component D), a copolymer prepared from 85 to 95 % by weight of ethylene and 15 to 5 % by weight of vinyl acetate, in a proportion of 5 to 15 % by weight, based on the sum of components A) to D).

3. Coating composition according to Claim 1 or 2, characterised in that polyester diols and diamines in a molar ratio of 0.8 : 1 to 1.2 : 1 have been used as component $a_1$) to prepare the resin A).

4. Coating composition according to one of Claims 1 to 3, characterised in that, in addition to components A), B), C) and if appropriate D), it contains, as component E), polymeric microparticles having a size or size distribution in the range from 0.01 to 2 $\mu$m, in a proportion of 5 to 15 % by weight, based on the sum of components A) to E), the said microparticles having been prepared by emulsion polymerisation of a mixture of unsaturated monomers, some of which preferably contain carboxyl or hydroxyl groups and some of which are free of carboxyl and hydroxyl groups, and a polyfunctional crosslinking agent, the emulsion polymerisation having been carried out in the aqueous phase and the water having been removed during or after the polymerisation.

5. Process for the preparation of coatings, in which a coating composition containing metallic pigments for the formation of a base coat is applied to a substrate, this being followed, after a period of exposure to the air, by the application according to the wet-in-wet process of a second coating composition forming a transparent protective coat, characterised in that the binder of the coating composition for the base coat consists of the following components:

A) 20 to 60 % by weight of one or more elastomers which contain urethane and urea groups in one molecule and can be prepared by reacting

a1) linear polyether or polyester glycols with terminal hydroxyl groups and linear diamines having primary and/or secondary amino groups, if appropriate together with low-molecular-weight diols having molecular weights of about 62 to 400 with

a2) aliphatic and/or cycloaliphatic diisocyanates, components a1) and a2) being employed in a molar ratio of 0.8 : 1 to 1.5 : 1,

B) 10 to 50 % by weight of one or more polyesters which can be prepared by reacting

11

b1) aromatic and aliphatic and/or cycloaliphatic polycarboxylic acids, 40 to 70 mol % of the polycarboxylic acids being aromatic and 60 to 30 mol % of the polycarboxylic acids being aliphatic and/or cycloaliphatic, and 0 to 50 mol % of the total polycarboxylic acids being tricarboxylic acids, with

b2) polyols, 20 to 60 mol % of the polyols having 2 or 3 carbon atoms and 40 to 80 mol % having 4 or more carbon atoms, at least 40 mol % of the diols used having aliphatic side-chains, 0 to 50 mol % of the polyols being triols and the ratio of the components b1) and b2) corresponding to the following formula

$$K = \frac{n_1 - n_2 (F - 2)}{n_2}$$

in which $n_1$ denotes the number of mol of polyols, $n_2$ denotes the number of mol of polycarboxylic acids, F denotes the average molar value of the functionality of the polycarboxylic acids and K has a value of 1.05 to 1.5, and

C) 5 to 25 % by weight of one or more polycondensates partially etherified with monoalcohols and consisting of melamine, benzoguanamine and/or urea with formaldehyde, the molar ratio of melamine to formaldehyde in the case of melamine/formaldehyde resins being 1 : 4.5 to 1 : 6 and the molar ratio of benzoguanamine or urea to formaldehyde in the case of benzoguanamine/formaldehyde or urea/formaldehyde resins being 1 : 2.5 to 1 : 4, and the sum of the components A), B) and C) being 100 %.

6. Process according to Claim 5, characterised in that the coating composition for the base coat contains, as a further binder component D), a copolymer prepared from 85 to 95 % by weight of ethylene and 15 to 5 % by weight of vinyl acetate, in a proportion of 5 to 15 % by weight, based on the sum of components A) to D).

7. Process according to Claim 5 or 6, characterised in that polyester diols and diamines in a molar ratio of 0.8 : 1 to 1.2 : 1 have been used as component $a_1$) to prepare the resin A).

8. Process according to one of Claims 5 to 7, characterised in that, in addition to components A), B), C) and if appropriate D), the coating composition contains, as component E), polymeric microparticles having a size or size distribution in the range from 0.01 to 2 $\mu$m, in a proportion of 5 to 15 % by weight, based on the sum of components A) to E), the said microparticles having been prepared by emulsion polymerisation. of a mixture of unsaturated monomers, some of which preferably contain carboxyl or hydroxyl groups and some of which are free of carboxyl and hydroxyl groups, and a polyfunctional crosslinking agent, the emulsion polymerisation having been carried out in the aqueous phase and the water having been removed during or after the polymerisation.

9. Substrate coated with a multilayer enamel consisting of a base coat containing at least one metallic pigment and of at least one transparent protective coat, characterised in that a coating composition according to one of Claims 1 to 4 has been used to prepare the base coat.

**Revendications**

1 - Masse de revêtement pour la préparation de la couche de base d'un enduit à plusieurs couches comprenant au moins une couche de base et au moins une couche de recouvrement transparente, renfermant un liant à base de résines organiques, des pigments métalliques, des solvants organiques et, le cas échéant, d'autres pigments ainsi que des additifs et adjuvants usuels, caractérisée par le fait que le liant comprend les composants suivants :

(A) 20 à 60% en poids d'un ou de plusieurs élastomères, qui contiennent des groupements uréthanne et urée dans une molécule et qui peuvent être préparés par réaction :

(a1) de polyétherglycols ou polyesterglycols linéaires présentant des groupes hydroxyle terminaux et de diamines linéaires présentant des groupes amino primaires et/ou secondaires, le cas échéant conjointement avec des diols de faible masse moléculaire, présentant des masses moléculaires d'environ 62 à 400, avec

(a2) des diisocyanates aliphatiques et/ou cycloaliphatiques,

les composants (a1) et (a2) étant introduits dans un rapport molaire de 0,8:1 à 1,5:1;

(B) 10 à 50% en poids d'un ou de plusieurs polyesters, que l'on peut obtenir par réaction :

(b1) d'acides polycarboxyliques aromatiques et aliphatiques et/ou cycloaliphatiques, où 40 à 70% en moles des acides polycarboxyliques sont des acides polycarboxyliques aromatiques, et 60 à 30% en moles des acides polycarboxyliques sont des acides polycarboxyliques aliphatiques et/ou cycloaliphatiques, et 0 à 50% en moles des acides polycarboxyliques totaux sont des acides tricarboxyliques, avec (b2) des polyols, où 20 à 60% en moles des polyols présentent 2 ou 3 atomes de carbone et 40 à 80% en moles présentent 4 atomes de carbone ou davantage, au moins 40% en moles des diols utilisés présentent des chaînes latérales aliphatiques, 0 à 50% en moles des polyols sont des triols, et le rapport des composants (b1) et (b2) correspond à la formule suivante :

$$K = \frac{n_1 - n_2 (F - 2)}{n_2}$$

dans laquelle :
- $n_1$ est le nombre de moles des polyols ;
- $n_2$ est le nombre de moles des acides polycarboxyliques ; et
- F est la valeur moyenne molaire de la fonctionnalité des acides polycarboxyliques ; et
- K présente une valeur allant de 1,05 à 1,5 ; et

(C) 5 à 25% en poids d'un ou plusieurs polycondensats partiellement éthérifiés par des monoalcools, de mélamine, benzoguanamine et/ou urée avec le formaldéhyde, où, dans le cas de résines mélamine-formaldéhyde, le rapport molaire mélamine à formaldéhyde va de 1:4,5 à 1:6, et, dans le cas de résines de benzoguanamine - ou urée - formaldéhyde, le rapport molaire benzoguanamine ou urée à formaldéhyde va de 1:2,5 à 1:4,

et où la somme des composants (A), (B) et (C) s'élève à 100%.

2 - Masse de revêtement selon la revendication 1, caractérisée par le fait qu'elle renferme, en outre, comme composant (D), un copolymère préparé à partir de 85 à 95% en poids d'éthylène et de 15 à 5% en poids d'acétate de vinyle, à un taux de 5 à 15% en poids par rapport à la somme des composants (A) à (D).

3 - Masse de revêtement selon la revendication 1 ou 2, caractérisée par le fait que, pour préparer la résine (A), ont été utilisés comme composants (a1) des polyesterdiols et des diamines dans un rapport molaire de 0,8:1 à 1,2:1.

4 - Masse de revêtement selon l'une des revendications 1 à 3, caractérisée par le fait qu'elle renferme, en plus des composants (A), (B), (C) et, le cas échéant, (D), comme composant (E), des microparticules polymères présentant une taille ou une distribution des tailles se situant dans la gamme de 0,01 à 2 $\mu$m, à un taux de 5 à 15% en poids par rapport à la somme des composants (A) à (E), ces microparticules ayant été préparées par polymérisation en émulsion d'un mélange de monomères insaturés, dans lesquels, de préférence, une partie renferme des groupes carboxyle ou hydroxyle, et une partie est exempte de groupes carboxyle et hydroxyle et un agent de réticulation polyfonctionnel, où la polymérisation en émulsion a été effectuée en phase aqueuse et l'eau a été éliminée pendant ou après la polymérisation.

5 - Procédé de fabrication de revêtements, suivant lequel on applique, sur un substrat, une masse de revêtement renfermant des pigments métalliques en vue de la formation d'une couche de base et, après une période de ventilation selon le procédé humide-sur-humide, par-dessus, une deuxième masse de revêtement formant une couche de recouvrement transparente, caractérisé par le fait que le liant de la masse de revêtement pour la couche de base comprend les composants suivants :

(A) 20 à 60% en poids d'un ou de plusieurs élastomères, qui contiennent des groupements uréthanne et urée dans une molécule et qui peuvent être préparés par réaction :

(a1) de polyétherglycols ou polyesterglycols linéaires présentant des groupes hydroxyle terminaux et de diamines linéaires présentant des groupes amino primaires et/ou secondaires, le cas échéant conjointement avec des diols de faible masse moléculaire, présentant des masses moléculaires d'environ 62 à 400, avec

(a2) des diisocyanates aliphatiques et/ou cycloaliphatiques,

les composants (a1) et (a2) étant introduits dans un rapport molaire de 0,8:1 à 1,5:1;

(B) 10 à 50% en poids d'un ou de plusieurs polyesters, que l'on peut obtenir par réaction :

(b1) d'acides polycarboxyliques aromatiques et aliphatiques et/ou cycloaliphatiques, où 40 à 70% en moles des acides polycarboxyliques sont des acides polycarboxyliques aromatiques et 60 à 30% en moles des acides polycarboxyliques sont des acides polycarboxyliques aliphatiques et/ou cycloaliphatiques, et 0 à 50% en moles des acides polycarboxyliques totaux sont des acides tricarboxyliques, avec (b2) des polyols, où 20 à 60% en moles des polyols présentent 2 ou 3 atomes de carbone et 40 à 80% en moles présentent 4 atomes de carbone ou davantage, au moins 40% en moles des diols utilisés présentent des chaînes latérales aliphatiques, 0 à 50% en moles des polyols sont des triols, et le rapport des composants (b1) et (b2) correspond à la formule suivante :

$$K = \frac{n_1 - n_2(F - 2)}{n_2}$$

dans laquelle :
- $n_1$ est le nombre de moles des polyols ;
- $n_2$ est le nombre de moles des acides polycarboxyliques ; et
- F est la valeur moyenne molaire de la fonctionnalité des acides polyarboxyliques ; et
- K présente une valeur allant de 1,05 à 1,5 ; et

(C) 5 à 25% en poids d'un ou plusieurs polycondensats partiellement éthérifiés par des monoalcools, de mélamine, benzoguanamine et/ou urée avec le formaldéhyde, où, dans le cas de résines mélamine-formaldéhyde, le rapport molaire mélamine à formaldéhyde va de 1:4,5 à 1:6, et, dans le cas de résines benzoguanamine - ou urée - formaldéhyde, le rapport molaire benzoguanamine ou urée à formaldéhyde va de 1:2,5 à 1:4,

et où la somme des composants (A), (B) et (C) s'élève à 100%.

6 - Procédé selon la revendication 5, caractérisé par le fait que la masse de revêtement pour la couche de base renferme, comme autre composant de liant (D), un copolymère préparé à partir de 85 à 95% en poids d'éthylène et de 15 à 5% en poids d'acétate de vinyle, à un taux de 5 à 15% en poids par rapport à la somme des composants (A) à (D).

7 - Procédé selon l'une des revendications 5 ou 6, caractérisé par le fait que, pour préparer la résine (A), ont été utilisés comme composants (a1) des polyesterdiols et des diamines dans un rapport molaire de 0,8:1 à 1,2:1.

8 - Procédé selon l'une des revendications 5 à 7, caractérisé par le fait que la masse de revêtement renferme, en plus des composants (A), (B), (C) et, le cas échéant, (D), comme composant (E), des microparticules polymères présentant une taille ou une distribution des tailles se situant dans la gamme de 0,01 à 2 μm, à un taux de 5 à 15% en poids par rapport à la somme des composants (A) à (E), ces microparticules ayant été préparées par polymérisation en émulsion d'un mélange de monomères insaturés, dans lesquels, de préférence, une partie renferme des groupes carboxyle ou hydroxyle, et une partie est exempte de groupes carboxyle et hydroxyle et un agent de réticulation polyfonctionnel, où la polymérisation en émulsion a été effectuée en phase aqueuse et l'eau a été éliminée pendant ou après la polymérisation.

9 - Substrat revêtu par un enduit à plusieurs couches comprenant une couche de base renfermant des pigments métalliques et au moins une couche de recouvrement transparente, caractérisé par le fait que, pour réaliser la couche de base, on a utilisé une masse de revêtement telle que définie à l'une des revendications 1 à 4.